# EUROPEAN PATENT APPLICATION

(11) **EP 3 549 785 A1**
(43) Date of publication of application: **09.10.2019**
(21) Application number: 17875232.5
(22) Date of filing: 24.11.2017
(51) Int. Cl.: B60C 5/01, B60C 9/22

(54) **TIRE**

(30) Priority: 02.12.2016 JP 2016235061
(71) Applicant: Bridgestone Corporation, Tokyo 104-8340 (JP)
(72) Inventor: MURATA, Hiroshi, Tokyo 104-8340 (JP)
(74) Representative: Oxley, Robin John George
(86) International application number: PCT/JP2017/042279
(87) International publication number: WO 2018/101175

(57) **Abstract**

A tire 10 includes a resin tire case 17, a belt layer 12, a corner filler member 40, and a tread 38. The resin tire case 17 is made from resin and includes a bead portion 14, a side portion 16, and a crown portion 18. The belt layer 12 is provided at the tire radial direction outside of the crown portion 18 and is formed by winding a covered reinforcing cord 28 configured by covering a reinforcing cord 24 with resin in a tire circumferential direction so as to form a spiral pattern. The corner filler member 40 is provided at the radial direction outside of the crown portion 18 so as to fill a corner recess formed between an outer face 18A of the crown portion 18 and an upright-projecting face of the belt layer 12. The tread 38 covers the crown portion 18 from the tire radial direction outside of the belt layer 12.

## Description

### Technical Field

The present invention relates to a tire.

### Background Art

In recent years, there has been demand to employ resin materials (such as thermoplastic resins and thermoplastic elastomers) as tire materials due to being light in weight, easy to mold, and easy to recycle.

Japanese Patent Application Laid-Open (JP-A) No. 2014-210487 discloses a tire in which a reinforcing layer is formed by winding a reinforcing cord member onto a flat crown portion of a resin tire frame member so as to form a spiral pattern.

The reinforcing cord member is formed by covering a reinforcing cord with resin, and this covering resin is welded to the tire frame member.

### SUMMARY OF INVENTION

### Technical Problem

In cases in which a belt layer is formed by winding the resin-covered reinforcing cord member onto the resin tire frame member so as to form a spiral pattern, corners are formed between an outer face of the crown portion and the two tire axial direction side faces of the belt layer. Air is liable to become trapped in these corners when forming a tread.

In consideration of the above circumstances, an object of the present invention is to provide a tire capable of suppressing the occurrence of trapped air between a tread and a tire frame member.

### Solution to Problem

A tire of a first aspect of the present invention includes: a tire frame member that is made of resin and that includes a bead portion, a side portion formed continuously with a tire radial direction outer side of the bead portion, and a crown portion formed continuously with a tire width direction inner side of the side portion; a belt layer that is provided at a tire radial direction outer side of the crown portion, and that comprises a resin-covered reinforcing cord wound in a tire circumferential direction in a spiral pattern; a corner filler member that is provided at the radial direction outer side of the crown portion so as to fill a corner recess formed between an outer face of the crown portion and an upright face of the belt layer; and a tread that covers the crown portion from a tire radial direction outer side of the belt layer.

In the tire of the first aspect, the belt layer is formed at the tire radial direction outer side of the crown portion of the resin tire frame member. The belt layer is formed by winding the covered reinforcing cord configured by covering a reinforcing cord with resin in the tire circumferential direction so as to form a spiral pattern. A corner recess is formed between a face where the belt layer projects upright from the outer face of the crown portion and the outer face of the crown portion. The corner filler member is provided at the radial direction outer side of the crown portion so as to fill the corner recess. This enables the occurrence of trapped air between the tread and the tire frame member to be suppressed when covering the crown portion with the tread from the tire radial direction outer side of the belt layer.

In a tire of a second aspect, the upright face is at least one of a side end face at a tire axial direction outer side of the belt layer, or a winding start end face or a winding finish end face of the resin-covered reinforcing cord.

Providing the corner filler member to at least one out of the side end face at the tire axial direction outer side of the belt layer or the winding start end face or winding finish end face of the covered reinforcing cord enables the corner recess between the outer face of the belt layer and the crown portion to be filled.

In a tire of a third aspect, the corner filler member has an annular shape and configures a separate body from the tire frame member.

Configuring the corner filler member with an annular shape and as a separate body from the tire frame member enables the corner filler member to be disposed after the belt layer has been formed to the crown portion, thereby enabling the belt layer to be formed more easily.

In a tire of a fourth aspect, the resin-covered reinforcing cord has a parallelogram-shaped cross-section profile.

In cases in which the covered reinforcing cord has a parallelogram shaped cross-section profile, a corner recess formed between an end face on one tire axial direction side of the belt layer and the outer face of the crown portion has an obtuse angle, such that trapped air between the tread and the tire frame member is suppressed, even without providing a corner filler member. This enables the corner filler member to be provided at fewer locations.

### Advantageous Effects of Invention

As described above, the present invention is capable of suppressing the occurrence of trapped air between the tread and the tire frame member.

### BRIEF DESCRIPTION OF DRAWINGS

Fig. 1 is a cross-section taken along a tire axial direction of a tire according to a first exemplary embodiment.
Fig. 2 is an enlarged partial cross-section of the vicinity of a belt layer of a tire according to the first exemplary embodiment.
Fig. 3 is a perspective view of a tire case, a belt layer, and corner filler members (prior to assembly) of a tire according to the first exemplary embodiment.
Fig. 4 is a cross-section taken along a tire axial direction of a tire case, a belt layer, and corner filler members (after assembly) of a tire according to the first exemplary embodiment.

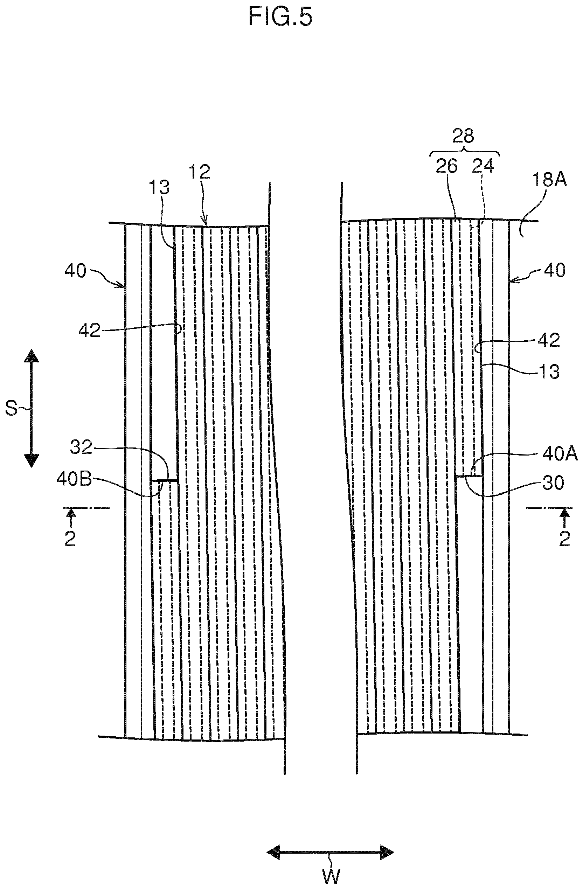

Fig. 5 is a partial plan view of a tire case, a belt layer, and corner filler members of a tire according to the first exemplary embodiment.
Fig. 6 is a cross-section taken along a tire axial direction of a tire according to a second exemplary embodiment.
Fig. 7 is an enlarged partial cross-section of the vicinity of a belt layer of a tire according to the second exemplary embodiment.
Fig. 8 is a perspective view of a tire case, a belt layer, and a corner filler member (prior to assembly) of a tire according to the second exemplary embodiment.

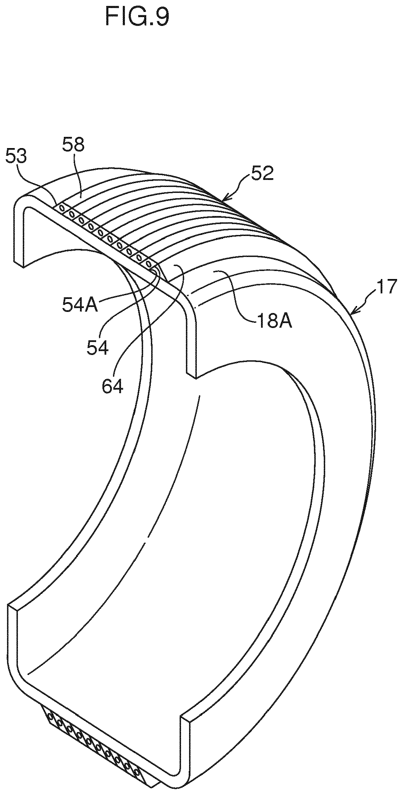

Fig. 9 is a cross-section taken along a tire axial direction of a tire case, a belt layer, and a corner filler member (after assembly) of a tire according to the second exemplary embodiment.

### DESCRIPTION OF EMBODIMENTS

### First Exemplary Embodiment

Explanation follows regarding an exemplary embodiment of the present invention, with reference to the drawings. In the drawings, a tire circumferential direction is indicated by an arrow S, a tire axial direction (which may also be understood as a tire width direction) is indicated by an arrow W, and a tire radial direction is indicated by an arrow R. The tire axial direction refers to a direction parallel to the axis of rotation of the tire.

In the following explanation, the sides further from a tire equatorial plane CL along the tire axial direction are referred to as the "tire axial direction outer sides" and the side closer toward the tire equatorial plane CL along the tire axial direction is referred to as the "tire axial direction inner side". Moreover, the side further from a tire axis in the tire radial direction is referred to as the "tire radial direction outer side", and the side closer to the tire axis in the tire radial direction is referred to as the "tire radial direction inner side".

The methods for measuring the dimensions of the respective sections are the methods set out in the 2016 Year Book issued by the Japan Automobile Tire Manufacturers Association (JATMA). In cases in which TRA standards or ETRTO standards apply in the place of use or place of manufacture, these standards are followed.

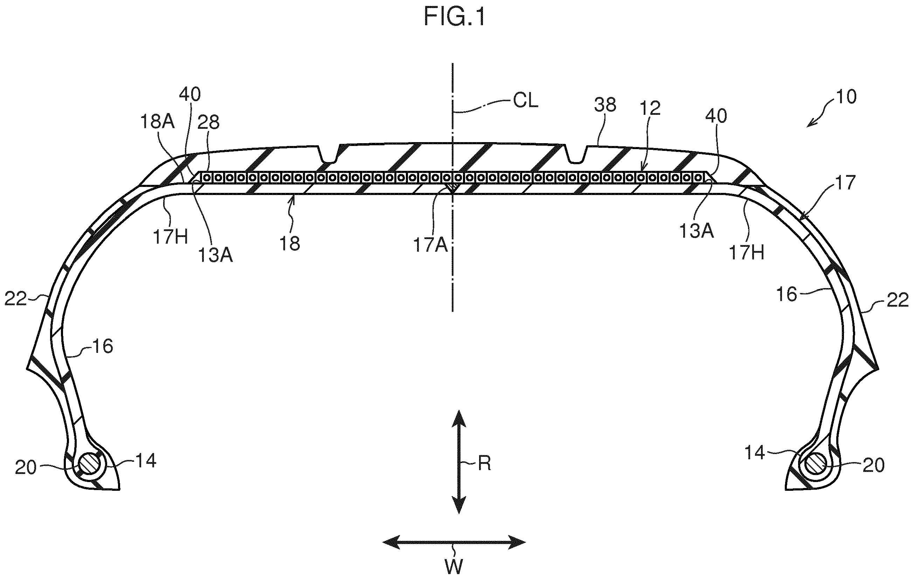

As illustrated in Fig. 1, a tire 10 according to the present exemplary embodiment includes a tire case 17 serving as an example of a circular ring shaped tire frame member, and a belt layer 12.

The tire case 17 is configured employing a resin material, and is formed in a circular ring shape following the tire circumferential direction. The tire case 17 is configured including a pair of bead portions 14 disposed spaced apart from each other in the tire axial direction, a pair of side portions 16 extending from the pair of bead portions 14 toward the tire radial direction outer side, and a crown portion 18 coupling together the pair of side portions 16. The bead portions 14 are locations that contact a rim (not illustrated in the drawings), and a covering layer 22, described later, is provided on the surface of each of the bead portions 14. The side portions 16 are formed at side portions of the tire 10, and curve gently so as to protrude toward the tire axial direction outer sides on progression from the bead portions 14 toward the crown portion 18.

The crown portion 18 is a location that couples a tire radial direction outer end of one of the side portions 16 and a tire radial direction outer end of the other of the side portions 16 together, and supports a tread 38 laid at the tire radial direction outer side of the crown portion 18.

In the present exemplary embodiment, the crown portion 18 has a substantially uniform thickness. An outer peripheral face 18A may be formed with a flat profile in cross-section taken along the tire axial direction, or may have a curving profile bulging toward the tire radial direction outer side. Note that the outer peripheral face 18A of the crown portion 18 of the present exemplary embodiment configures an outer periphery of the tire case 17 to which the belt layer 12 is provided.

The tire case 17 is formed by forming a pair of annular tire halves 17H, each including a single bead portion 14, a single side portion 16, and a half-width crown portion 18. The tire halves 17H are made to face each other, and end portions of the half-width crown portions 18 are bonded together at the tire equatorial plane CL. The end portions are bonded together using, for example, a resin welding material 17A.

An annular bead core 20 extending so as to follow the tire circumferential direction is embedded in each of the bead portions 14. The bead core 20 is configured from a bead cord (not illustrated in the drawings). The bead cord is, for example configured by a metal cord such as a steel cord, an organic fiber cord, a resin-covered organic fiber cord, or a hard resin. Note that the bead core 20 may be omitted as long as sufficient rigidity of the bead portion 14 can be secured.

Of the surface of each of the bead portions 14, at least a portion that contacts the rim (not illustrated in the drawings) is formed with the covering layer 22 in order to increase the airtightness against the rim. The covering layer 22 is configured from a material such as a rubber material that is softer and more weather-resistant than the tire case 17.

In the present exemplary embodiment, the covering layer 22 is folded back from an inner face at the tire axial direction inner side of each of the bead portions 14 toward the tire axial direction outer side, and extends across an outer face of the side portion 16 to the vicinity of a tire axial direction outer side end portion of the belt layer 12. An extension end portion of the covering layer 22 is covered by the tread 38, described later. The covering layer 22 may be omitted if sealing properties (airtightness) between the bead portion 14 and the rim (not illustrated in the drawings) can be secured by the bead portion 14 of the tire case 17 alone.

Note that the tire case 17 may be configured by an integrally molded article, or the tire case 17 may be manufactured as three or more separate resin members which are then bonded together. For example, respective locations of the tire case 17 (for example the bead portions 14, the side portions 16, and the crown portion 18) may be manufactured separately and then bonded together. In such cases, the respective locations of the tire case 17 (for example the bead portions 14, the side portions 16, and the crown portion 18) may be formed using resin materials with different characteristics to each other.

Reinforcing material (polymer or metal fibers, cord, nonwoven fabric, woven fabric, or the like) may be embedded in the tire case 17.

The belt layer 12 is provided at the tire radial direction outer side of the tire case 17. The belt layer 12 is formed by winding a resin-covered cord 28 around the outer peripheral face 18A of the crown portion 18 in the tire circumferential direction so as to form a spiral pattern.

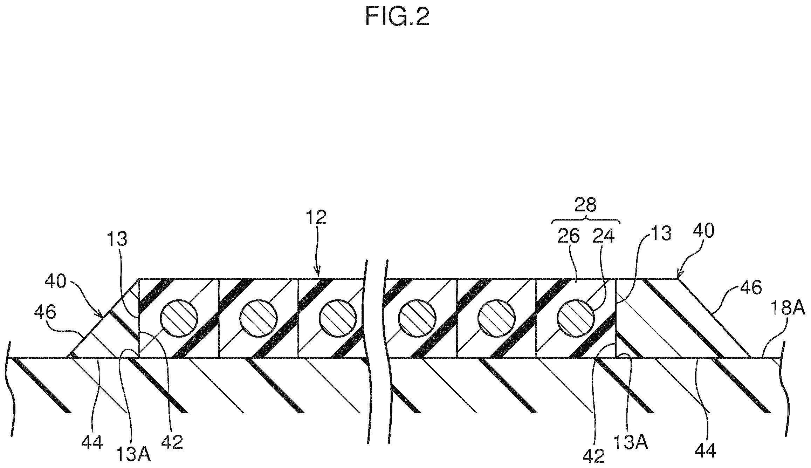

As illustrated in Fig. 2, the resin-covered cord 28 is configured by covering a reinforcing cord 24 with a covering resin 26, and has a substantially square shaped cross-section profile. The covering resin 26 is bonded to the tire case 17 at a tire radial direction inner peripheral portion of the resin-covered cord 28. The covering resin 26 is also bonded at mutually adjacent locations of the resin-covered cord 28 in the tire axial direction.

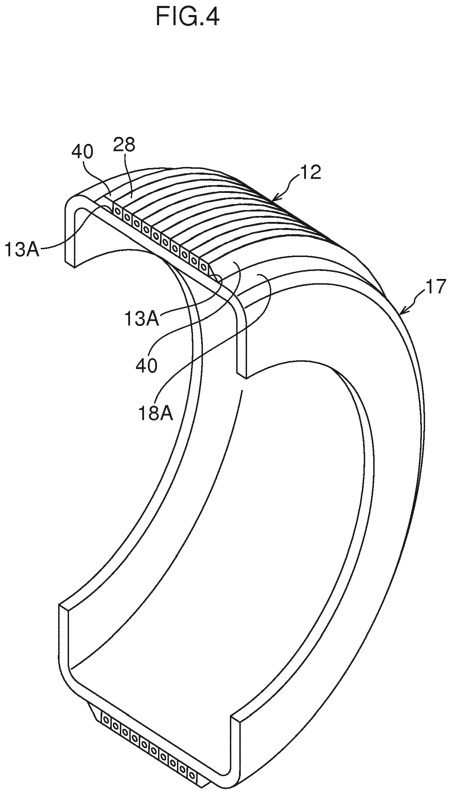

The reinforcing cord 24 is, for example, configured from a metal fiber or an organic fiber monofilament (single strand), or from a multifilament (twisted strands) configured by twisting together such fibers. The covering resin 26 is, for example, configured by a thermoplastic elastomer. In Fig. 4, the resin-covered cord 28 includes one or plural strands of the reinforcing cord 24 within the covering resin 26, with one strand of the reinforcing cord 24 being covered by the covering resin 26 in the present exemplary embodiment.

Resin materials employed for the tire case 17 and the covering resin 26 in the present exemplary embodiment are not limited to thermoplastic elastomers. For example, thermoplastic resins, thermosetting resins, and other general purpose resins, as well as engineering plastics (including super engineering plastics) may be employed as the resin materials. Note that the resin materials referred to herein do not include vulcanized rubber.

Thermoplastic resins (including thermoplastic elastomers) are polymer compounds of materials that soften and flow with increased temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined by JIS K7206 (method A), of 130°C may be employed.

Thermosetting resins are curable polymer compounds that form a 3 dimensional mesh structure with increasing temperature. Examples of thermosetting resins include phenolic resins, epoxy resins, melamine resins, and urea resins.

As resin materials, in addition to the above thermoplastic resins (including thermoplastic elastomers) and thermosetting resins, general purpose resins may also be employed, such as meth(acrylic)-based resins, EVA resins, vinyl chloride resins, fluororesins, and silicone-based resins.

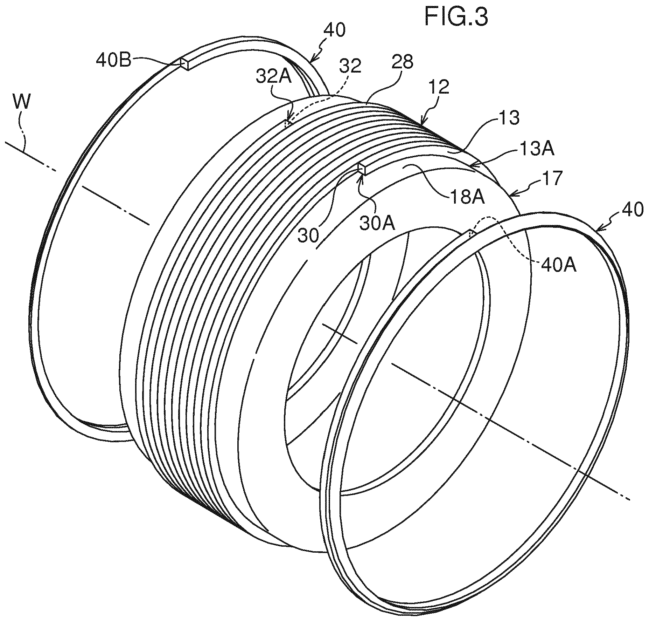

As is also illustrated in Fig. 3, a side end face 13 that projects upright from the outer peripheral face 18A of the crown portion 18 toward the tire radial direction outer side is formed at both tire axial direction outer side ends of the belt layer 12. Side corner recesses 13A are formed between the outer peripheral face 18A of the crown portion 18 and the respective side end faces 13. A start end face 30 and a finish end face 32 that project upright from the outer peripheral face 18A of the crown portion 18 toward the tire radial direction outer side are respectively formed at a winding start end and a winding finish end of the resin-covered cord 28. A start end corner recess 30A and a finish end corner recess 32A are respectively formed between the outer peripheral face 18A of the crown portion 18 and the start end face 30 and between the outer peripheral face 18A of the crown portion 18 and the finish end face 32.

Corner filler members 40 are provided at the tire axial direction outer sides of the belt layer 12. Each of the corner filler members 40 has an annular shape, and includes a side face 42 running along the side end face 13, an inner peripheral face 44 extending from an end portion on the crown portion 18 side of the side face 42 so as to follow the crown portion 18, and a sloped face 46 that is contiguous to a tire radial direction outer side end portion of the side face 42 and a tire axial direction end portion of the inner peripheral face 44. The cross-section profile of the corner filler member 40 changes between a substantially trapezoidal shape and a substantially triangular shape, depending on the tire circumferential direction position. The respective corner filler members 40 are formed with a start end bearing face 40A that faces the start end face 30 of the belt layer 12, and a finish end bearing face 40B that faces the finish end face 32 of the belt layer 12. The start end bearing face 40A and the finish end bearing face 40B each have substantially the same cross-section profile as the cross-section of the resin-covered cord 28. A tire axial direction inner end edge of each of the corner filler members 40 extends so as to follow a tire circumferential direction outer end edge of the belt layer 12, and a tire axial direction outer end edge of each of the corner filler members 40 extends so as to follow the tire circumferential direction.

The respective corner filler members 40 fill the side corner recesses 13A, the start end corner recess 30A, and the finish end corner recess 32A. The side faces 42 cover the side end faces 13, the start end bearing face 40A covers the start end face 30, and the finish end bearing face 40B covers the finish end face 32. The corner filler members 40 may be formed using a similar resin material to the tire case 17 and the covering resin 26 previously described. Alternatively, the corner filler members 40 may be formed using a rubber material. Each of the corner filler members 40 is disposed such that an angle of a corner formed between the outer peripheral face 18A and the corner filler member 40 is an obtuse angle.

The tread 38 is bonded to the outer periphery of the tire case 17 from the outer side of the belt layer 12. The tread 38 is formed using a rubber material.

### Tire Manufacturing Method

Explanation follows regarding a manufacturing method of the tire 10 of the present exemplary embodiment. First, a thermoplastic resin is injection molded to form a set of the tire halves 17H incorporating the bead cores 20. Injection molding of the tire halves 17H is performed in a state in which the bead core 20 that has been formed in advance is disposed at a predetermined position inner side a mold. Thus, the bead core 20 is embedded inner side the bead portion 14 of each of the molded tire halves 17H. The covering layer 22 is formed on the outer faces of the tire halves 17H.

Next, the pair of tire halves 17H are made to face each other and end portions of the portions configuring the crown portion 18 are abutted against each other. The resin welding material 17A is applied to the abutting portions in a molten state, and the pair of tire halves 17H are bonded together. The circular ring shaped tire case 17 is formed in this manner.

Next, the resin-covered cord 28 is wound onto the outer periphery of the tire case 17. Specifically, winding is started from the start end face 30 at one end portion of the resin-covered cord 28 on one tire axial direction end side of the outer periphery of the crown portion 18. The resin-covered cord 28 is wound on to make one circuit of the outer periphery of the crown portion 18, and the resin-covered cord 28 is then wound on in a spiral pattern in which each subsequent section abuts the section wound on in the preceding circuit. Winding of the resin-covered cord 28 ends at the other tire axial direction end side of the outer periphery of the crown portion 18. An end face of a portion at the winding end configures the finish end face 32. The belt layer 12 is formed in this manner.

Next, the corner filler members 40 are disposed on the tire radial direction outer periphery of the tire case 17 at the one tire axial direction end side and the other tire axial direction end side of the belt layer 12. At the one end side, the corner filler member 40 is disposed such that the start end bearing face 40A and the side face 42 of the corner filler member 40 respectively contact the start end face 30 and the side end face 13 of the resin-covered cord 28 that has been wound in a spiral pattern. At the other end side, the corner filler member 40 is disposed such that the finish end bearing face 40B and the side face 42 of the corner filler member 40 respectively contact the finish end face 32 and the side end face 13 of the resin-covered cord 28 that has been wound on in a spiral pattern. Heating the side face 42 and the inner peripheral face 44 in advance enables each of the corner filler members 40 to be welded to the belt layer 12 and the crown portion 18.

Although not described in detail, next, the tire 10 is completed by providing the tread 38 at the tire radial direction outer side of the tire case 17 and the belt layer 12 in a vulcanization process. Note that a cushion rubber (not illustrated in the drawings) may be disposed between the tread 38 and the tire case 17 and belt layer 12.

In the tire 10 of the present exemplary embodiment, the side corner recesses 13A, the start end corner recess 30A, and the finish end corner recess 32A are filled by the corner filler members 40. This enables the ease with which air becomes trapped in the side corner recesses 13A, the start end corner recess 30A, and the finish end corner recess 32A to be reduced when covering the tire case 17 and the belt layer 12 from the tire radial direction outer side with the tread 38.

Moreover, the rigidity of the corner filler members 40 is higher than that of the tread 38 and lower than that of the belt layer 12, thereby enabling the jump in rigidity between the belt layer 12 and the tread 38 to be lessened, enabling uneven wear to be suppressed.

Note that although the respective corner filler members 40 are disposed such that the side corner recesses 13A, the start end corner recess 30A, and the finish end corner recess 32A are all filled in the present exemplary embodiment, configuration may be such that a corner filler member 40 is disposed at at least one location out of the side corner recesses 13A, the start end corner recess 30A, or the finish end corner recess 32A.

Moreover, although the height of the corner filler members 40 is substantially the same as the height of the belt layer 12 in the present exemplary embodiment, the height of the corner filler members 40 may be lower than that of the belt layer 12. Trapping of air can be suppressed as long as the corner recesses of the side corner recesses 13A, the start end corner recess 30A, and the finish end corner recess 32A are partially filled by the corner filler members 40, and the respective angles of the side corner recesses 13A, the start end corner recess 30A, and the finish end corner recess 32A become obtuse angles.

In the case of the start end corner recess 30A and the finish end corner recess 32A, the occurrence of trapped air may also be suppressed by forming obtuse angles by applying slopes such that the heights (distance from the outer peripheral face 18A) of the start end corner recess 30A and the finish end face 32 become gradually lower on progression around the tire circumferential direction.

Although the corner filler members 40 are provided as separate bodies to the tire case 17 in the present exemplary embodiment, the corner filler members 40 may be formed integrally molded to the tire case 17. Forming the corner filler members 40 as separate bodies, as in the present exemplary embodiment, enables the corner filler members 40 to be disposed after the belt layer 12 has been formed to the crown portion 18, thereby enabling the belt layer 12 to be formed more easily.

### Second Exemplary Embodiment

Explanation follows regarding a tire 50 according to a second exemplary embodiment of the present invention. Note that configuration similar to that of the first exemplary embodiment is appended with the same reference numerals, and explanation thereof is omitted as appropriate.

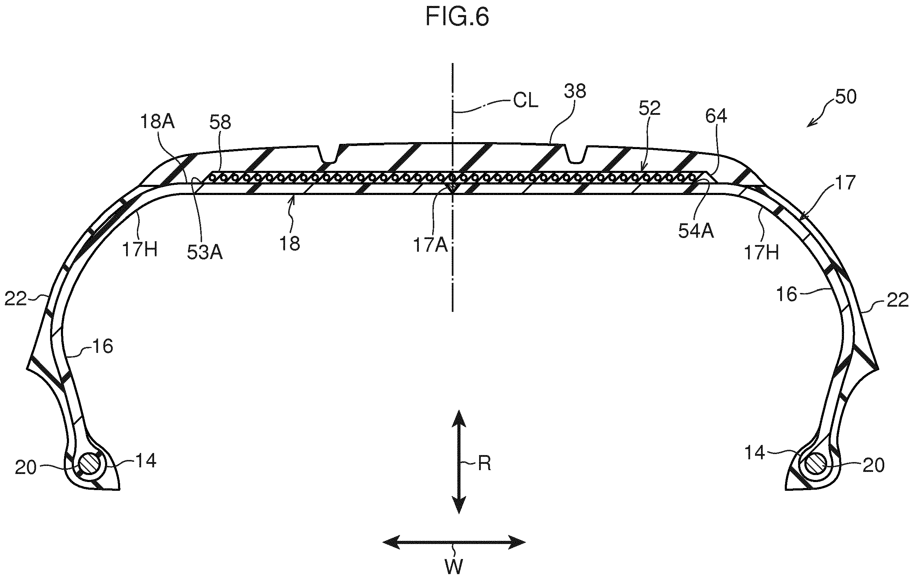

As illustrated in Fig. 6, the tire 50 of the present exemplary embodiment includes a belt layer 52. The belt layer 52 is formed by winding a resin-covered cord 58 onto the outer peripheral face 18A of the crown portion 18 in the tire circumferential direction so as to form a spiral pattern.

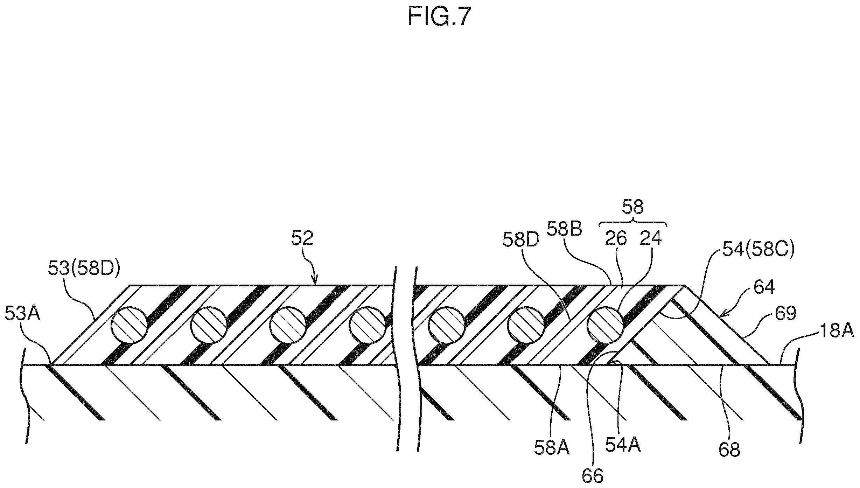

As illustrated in Fig. 7, the resin-covered cord 58 is configured by covering the reinforcing cord 24 with the covering resin 26, and has a substantially parallelogram shaped cross-section profile. Hereafter, when referring to the resin-covered cord 58, an outer face at a tire radial direction inner peripheral side is referred to as an inner peripheral face 58A, an outer face at an outer peripheral side is referred to an outer peripheral face 58B, a side face facing the tire case 17 side is referred to as a lower side face 58C, and a side face facing the tire radial direction outer side is referred to as an upper side face 58D. The inner peripheral face 58A of the resin-covered cord 58 is bonded to the tire case 17. The upper side face 58D and the lower side face 58C of the resin-covered cord 28 are also bonded together when adjacent to each other in the tire axial direction.

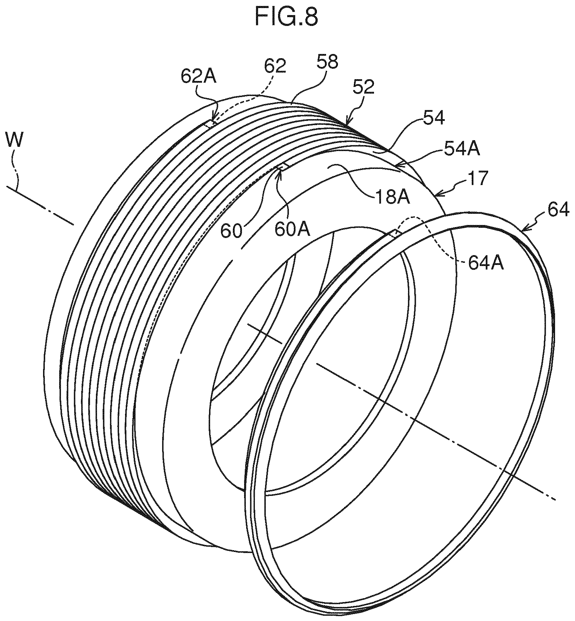

As is also illustrated in Fig. 8, an upward-facing sloping side face 53 is formed by the upper side face 58D at one tire axial direction outer end of the belt layer 52. A downward-facing sloping side face 54 is formed by the lower side face 58C at the other tire axial direction outer end of the belt layer 52. An upper side corner recess 53A with an obtuse angle is formed between the upward-facing sloping side face 53 and the outer peripheral face 18A of the crown portion 18. A lower side corner recess 54A with an acute angle is formed between the downward-facing sloping side face 54 and the outer peripheral face 18A of the crown portion 18. A start end face 60 and a finish end face 62 that project upright from the outer peripheral face 18A of the crown portion 18 toward the tire radial direction outer side are respectively formed at a winding start end and a winding finish end of the resin-covered cord 58. A start end corner recess 60A and a finish end corner recess 62A are respectively formed between the outer peripheral face 18A of the crown portion 18 and the start end face 60 and finish end face 62.

A corner filler member 64 is provided on the downward-facing sloping side face 54 side at the tire axial direction outer side of the belt layer 52. The corner filler member 64 has an annular shape, and includes a side face 66 following the downward-facing sloping side face 54, an inner peripheral face 68 extending along the crown portion 18 from an end portion on the crown portion 18 side of the side face 66, and a sloped face 69 that is contiguous to a tire radial direction outer side end portion of the side face 66 and a tire axial direction end portion of the inner peripheral face 68. The cross-section profile of the corner filler member 64 changes between a substantially trapezoidal shape and a substantially triangular shape, depending on the tire circumferential direction position. The corner filler member 64 is formed with a start end bearing face 64A that faces the start end face 60 of the belt layer 12. The start end bearing face 64A has substantially the same cross-section profile as a cross-section of the resin-covered cord 58. A tire axial direction inner end edge of the corner filler member 64 extends so as to follow a tire circumferential direction outer end edge of the belt layer 52, and a tire axial direction outer end edge of the corner filler member 64 extends so as to follow the tire circumferential direction.

The corner filler member 64 fills the lower side corner recess 54A and the start end corner recess 60A, the side face 66 covers the downward-facing sloping side face 54, and the start end bearing face 64A covers the start end face 60. The corner filler member 64 may be formed using a similar resin material to that of the tire case 17 and the covering resin 26 previously described. Alternatively, the corner filler member 64 may be formed using a rubber material.

Note that a corner filler member is not provided on the upward-facing sloping side face 53 side at the tire axial direction outer side of the belt layer 52.

### Tire Manufacturing Method

Explanation follows regarding a manufacturing method of the tire 50 of the present exemplary embodiment. The resin-covered cord 58 is wound onto the outer periphery of the circular ring shaped tire case 17, similarly to in the first exemplary embodiment.
Specifically, winding is started from the start end face 60 at one end portion of the resin-covered cord 58 on one tire axial direction end side of the outer periphery of the crown portion 18. The resin-covered cord 58 is wound on to make one circuit of the outer periphery of the crown portion 18 with the lower side face 58C facing toward the tire axial direction outer side, and the resin-covered cord 58 is then wound on in a spiral pattern in which the lower side face 58C of each subsequent section is superimposed on the upper side face 58D of the section wound on in the preceding circuit. Winding of the resin-covered cord 58 ends at the other tire axial direction end side of the outer periphery of the crown portion 18. An end face of a portion at the winding end configures the finish end face 62. The belt layer 52 is formed in this manner.

Next, the corner filler member 64 is disposed on the tire radial direction outer periphery of the tire case 17 at the one tire axial direction end side of the belt layer 52. The corner filler member 64 is disposed such that the start end bearing face 64A and the side face 66 of the corner filler member 64 respectively contact the start end face 60 and the downward-facing sloping side face 54 of the resin-covered cord 58 that has been wound in a spiral pattern. Heating the side face 66 and the inner peripheral face 68 in advance enables the corner filler member 64 to be welded to the belt layer 52 and the crown portion 18.

The tire 10 is then completed by providing the tread 38 at the tire radial direction outer side of the tire case 17 and the belt layer 52.

In the tire 50 of the present exemplary embodiment, the lower side corner recess 54A and the start end corner recess 60A are filled by the corner filler member 64. This enables the ease with which air becomes trapped in the lower side corner recess 54A and the start end corner recess 60A to be reduced when covering the tire case 17 and the belt layer 52 from the tire radial direction outer side with the tread 38.

Moreover, in the present exemplary embodiment, the resin-covered cord 58 has a parallelogram shaped cross-section, such that the upper side corner recess 53A formed at the other tire axial direction end side of the belt layer 52 forms an obtuse angle. This enables trapped air to be suppressed without the need for a corner filler member 64.

Note that in the case of the start end corner recess 60A and the finish end corner recess 62A, the occurrence of trapped air may also be suppressed by forming obtuse angles by applying slopes such that the height (distance from the outer peripheral face 18A) becomes gradually lower on progression around the tire circumferential direction.

Although the corner filler member 64 is provided as a separate body to the tire case 17 in the present exemplary embodiment, the corner filler member 64 may be formed integrally molded to the tire case 17. Forming the corner filler member 64 as a separate body as in the present exemplary embodiment enables the corner filler member 64 to be disposed after the belt layer 52 has been formed to the crown portion 18, thereby enabling the belt layer 52 to be formed more easily.

Note that although examples have been given in which the resin-covered cord has a substantially square shaped cross-section or a substantially parallelogram shaped cross-section in the first and second exemplary embodiments described above, the resin-covered cord may have a different cross-section profile to those described above. For example, the cross-section profile may be rectangular. Moreover, the resin-covered cord may be configured by covering plural strands (for example two, three, or more strands) of reinforcing cord with resin.

Explanation has been given regarding exemplary embodiments for implementing the present invention. However, the exemplary embodiments herein are merely examples, and various modifications may be implemented and the manufacturing sequence may be changed as appropriate within a range not departing from the spirit of the present invention. Moreover, it goes without saying that the scope of rights of the present invention are not limited by the exemplary embodiments herein.

The entire content of the disclosure of Japanese Patent Application No. 2016-235061 is incorporated by reference in the present specification.

All publications, patent applications and technical standards mentioned in the present specification are incorporated by reference in the present specification to the same extent as if the individual publication, patent application, or technical standard was specifically and individually indicated to be incorporated by reference.

## Claims

1. A tire, comprising:
a tire frame member that is made of resin and that includes a bead portion, a side portion formed continuously with a tire radial direction outer side of the bead portion, and a crown portion formed continuously with a tire width direction inner side of the side portion;
a belt layer that is provided at a tire radial direction outer side of the crown portion, and that comprises a resin-covered reinforcing cord wound in a tire circumferential direction in a spiral pattern;
a corner filler member that is provided at the radial direction outer side of the crown portion so as to fill a corner recess formed between an outer face of the crown portion and an upright face of the belt layer; and
a tread that covers the crown portion from a tire radial direction outer side of the belt layer.

2. The tire of claim 1, wherein the upright face is at least one of a side end face at a tire axial direction outer side of the belt layer, or a winding start end face or a winding finish end face of the resin-covered reinforcing cord.

3. The tire of claim 1 or claim 2, wherein the corner filler member has an annular shape and configures a separate body from the tire frame member.

4. The tire of any one of claim 1 to claim 3, wherein the resin-covered reinforcing cord has a parallelogram-shaped cross-section profile.
